# FASCICULE DE BREVET EUROPEEN

(11) **EP 0 605 269 B1**
(45) Date de publication et mention de la délivrance du brevet: **28.05.1997**
(21) Numéro de dépôt: 93402929.9
(22) Date de dépôt: 02.12.1993
(51) Int. Cl.: B01D 57/02, G01N 27/447

(54) **Procédé et dispositif d'électrophorèse multiple pour la migration et le transfert de macromolécules**
Multiples Electrophoreseverfahren und Vorrichtung für Wanderung und Transport von Makromolekülen
Method and apparatus for multiple electrophoresis for the migration and transfer at macromolecules

(30) Priorité: 22.12.1992 FR 9215451
(43) Date de publication de la demande: 06.07.1994
(73) Titulaire: BERTIN & CIE, F-78373 Plaisir Cédex (FR)
(72) Inventeur: Cognard, Dominique, F-78280 Guyancourt (FR); Hache, Jean, F-78960 Voisin le Bretonneux (FR)
(74) Mandataire: Ramey, Daniel

(56) Documents cités:
- EP-A- 0 313 293
- WO-A-90/02601
- WO-A-90/05017
- FR-A- 826 623
- US-A- 3 888 758
- US-A- 4 994 166

## Description

L'invention concerne un procédé et un dispositif d'électrophorèse multiple pour la migration et le transfert de macromolécules, telles que des protéines ou des acides nucléiques.

Il est bien connu maintenant de séparer des échantillons de macromolécules par électrophorèse, en les faisant migrer dans une plaque de gel sous l'effet d'un champ électrique. Les échantillons de macromolécules parcourent dans le gel des distances qui sont fonction de leur masse moléculaire. Sous l'effet d'un deuxième champ électrique, perpendiculaire au premier et aux plaques de gel, on peut transférer les macromolécules sur des membranes microporeuses associées aux plaques de gel.

Cette technique, dont la mise en oeuvre était initialement longue et délicate, a été peu à peu perfectionnée et simplifiée, de sorte que l'on sait actuellement réaliser la migration et la séparation des macromolécules, puis leur transfert, dans une même cuve et au moyen d'un même réseau d'électrodes, sans manipulation des plaques de gel et des membranes entre la migration et le transfert des macromolécules.

La demande internationale WO 90/02601 de la demanderesse, décrit notamment une cuve d'électrophorèse multiple dans laquelle on peut disposer un nombre relativement élevé de plaques de gel associées à des membranes, pour réaliser la séparation et le transfert des macromolécules de façon automatique ou quasi-automatique. La demande de brevet français 91 08578 de la demanderesse décrit par ailleurs des cassettes de fabrication et de manipulation de plaques de gel associées à des membranes, que l'on peut utiliser dans la cuve d'électrophorèse décrite dans la demande internationale précitée.

Ces moyens connus ont permis d'obtenir des résultats tout à fait remarquables, mais la fabrication des ensembles plaque de gel-membrane reste relativement délicate et demande un soin particulier pour que les plaques de gel soient homogènes et ne comprennent pas de bulles d'air, et pour que les membranes associées à ces plaques de gel soient bien planes et adhèrent sur toute leur surface utile aux plaques de gel. Par ailleurs, du fait que le gel, notamment lorsqu'il s'agit d'agarose, vieillit rapidement et très mal, il est impossible de préparer longtemps à l'avance de grandes quantités de plaques de gel et de membranes et de les stocker pour les utiliser ultérieurement.

La présente invention a notamment pour but d'apporter une solution simple, efficace et peu coûteuse à ces problèmes.

Elle a pour objet un procédé et un dispositif d'électrophorèse multiple pour la séparation de macromolécules dans du gel et leur transfert sur des membranes, qui n'utilisent pas d'ensembles gel-membrane préfabriqués.

L'invention propose donc un procédé d'électrophorèse multiple pour la migration contrôlée de macromolécules et leur transfert sur des membranes, dans une cuve comprenant une pluralité d'électrodes allongées parallèles et des moyens d'application de potentiels électriques à ces électrodes pour créer successivement entre elles un premier champ électrique de migration des macromolécules, puis un deuxième champ électrique perpendiculaire au premier pour le transfert des macromolécules sur des membranes, caractérisé en ce qu'il consiste à disposer dans la cuve des membranes qui sont sensiblement parallèles entre elles et aux électrodes et qui s'étendent entre les électrodes, et à remplir la cuve de gel d'électrophorèse en phase liquide, ce remplissage étant effectué avant ou après disposition des membranes dans la cuve, puis à solidifier ce gel, à déposer ensuite des échantillons de macromolécules dans des puits formés dans le gel le long des membranes, à appliquer aux électrodes des potentiels électriques pour assurer d'abord la migration des macromolécules dans le gel puis leur transfert sur les membranes, puis à liquéfier, dissoudre ou désagréger le gel, et à sortir les membranes de la cuve.

L'invention permet donc de ne plus préfabriquer de plaques de gel avant une électrophorèse, ce qui se traduit par un gain de temps, de moyens et d'efforts considérable.

L'invention améliore également la qualité des résultats obtenus, dans la mesure où l'électrophorèse a lieu dans un milieu plus homogène du fait de la suppression des cassettes de support des plaques de gel, ce qui se traduit par une augmentation de la fiabilité et de la reproductibilité des séparations et des transferts de macromolécules.

Dans une première forme de réalisation de l'invention, les membranes à disposer dans la cuve sont montées sur des cadres de support et de manipulation, et éventuellement mises sous faible tension sur ces cadres.

Ces cadres ont uniquement pour fonction de supporter et de tendre les membranes, et sont beaucoup plus simples et moins volumineux que dans la technique antérieure, où ils devaient servir à la fabrication et au support des plaques de gel.

En outre, leur utilisation facilite la manipulation des membranes.

Dans une autre forme de réalisation de l'invention, les membranes à disposer dans la cuve forment une bande continue, guidée en zigzag sur des rouleaux parallèles.

Cela réduit et simplifie encore la manipulation des membranes avant et après l'électrophorèse.

Le gel que l'on utilise dans la présente invention est un gel (typiquement d'agarose) que l'on peut solidifier et liquéfier par variation de température et/ou de concentration.

L'invention propose également un dispositif d'électrophorèse multiple pour la migration contrôlée de macromolécules et leur transfert sur des membranes, comprenant une cuve comportant une pluralité d'électrodes allongées parallèles et des moyens d'application de potentiels électriques aux électrodes pour créer successivement entre elles un premier champ électrique de migration et de séparation des macromolécules, puis un deuxième champ électrique perpendiculaire au premier pour le transfert des macromolécules sur des membranes, caractérisé en ce qu'il comprend également :
- des moyens de guidage ou de support des membranes dans la cuve, sensiblement parallèlement entre elles et aux électrodes précitées,
- des moyens de remplissage de la cuve par du gel d'électrophorèse en phase liquide,
- des moyens de solidification du gel dans la cuve,
- et des moyens destinés à liquéfier, dissoudre ou désagréger le gel dans la cuve.

Les moyens de liquéfaction du gel sont du type à élévation de température, par chauffage de la cuve et/ou chauffage des électrodes, et/ou par circulation d'un liquide chaud dans des tubes micro-poreux contenant les électrodes.

Les moyens de dissolution ou de désagrégation du gel sont par exemple du type à injection de liquide sous pression, ou du type à dépression, ou encore à génération d'ultrasons.

Dans un premier mode de réalisation de ce dispositif, les membranes sont fixées par leurs bords sur des cadres de support qui comprennent éventuellement des moyens de mise en tension des membranes.

Dans une variante de réalisation du dispositif, les membranes forment une bande continue guidée en zigzag sur des rouleaux sensiblement parallèles aux électrodes.

Avantageusement, les rouleaux de guidage de cette bande continue sont portés par un support commun et forment un ensemble unitaire mobile que l'on peut introduire dans la cuve et sortir de celle-ci.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
La figure 1 est une vue schématique en coupe verticale d'un dispositif d'électrophorèse selon l'invention ;
La figure 2 est une vue schématique partielle en coupe horizontale, selon la ligne II-II, du dispositif de la figure 1 ;
Les figures 3, 4 et 5 sont des vues schématiques d'une membrane, d'un cadre de support et d'un peigne de formation de puits ;
La figure 6 est une vue schématique en coupe verticale d'une variante de réalisation du dispositif selon l'invention ;
La figure 7 est une vue schématique en élévation d'un ensemble de support et de guidage des membranes, utilisable dans le dispositif de la figure 6 ;
La figure 8 est une vue schématique partielle de dessus de l'ensemble de la figure 7.

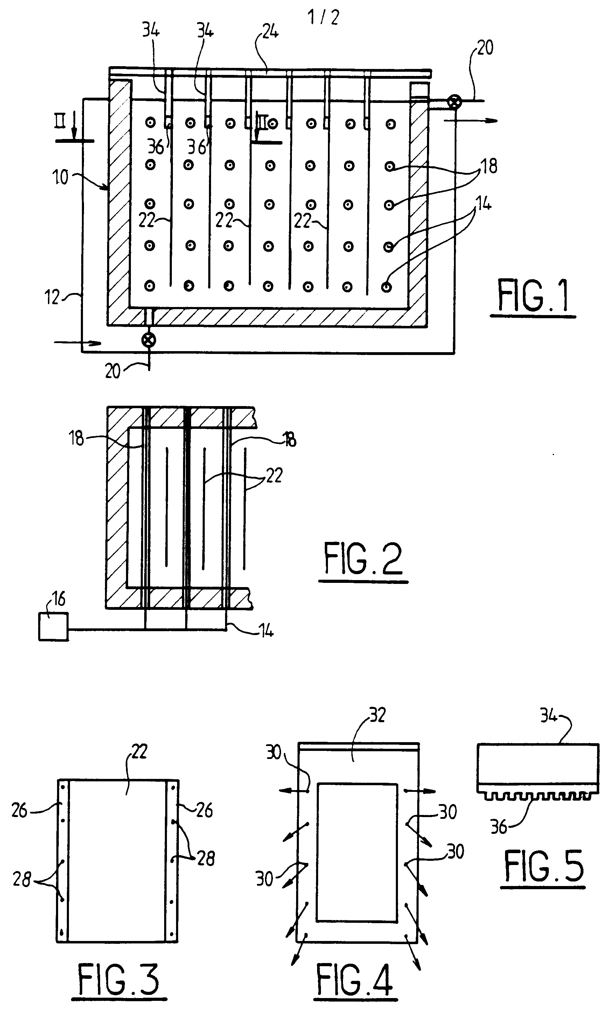

On se réfère d'abord aux figures 1 à 5, dans lesquelles on a représenté schématiquement une première forme de réalisation d'un dispositif selon l'invention.

On voit en figure 1 une cuve 10 d'électrophorèse, de forme sensiblement parallélépipédique rectangle, qui est entourée d'une chemise 12 de circulation d'un liquide caloporteur à température réglable, pour le chauffage et le refroidissement de la cuve 10.

De préférence, cette cuve comprend, comme décrit dans la demande internationale WO 90/02601 de la demanderesse, une pluralité d'électrodes allongées 14 qui sont horizontales et parallèles les unes aux autres, et qui sont agencées en rangées et en colonnes pour former un réseau à mailles carrées. Ces électrodes, qui sont constituées par des fils métalliques électro-conducteurs, sont reliées à leurs extrémités (figure 2) à des moyens 16 d'application de potentiels électriques pour former, entre les rangées ou entre les colonnes d'électrodes, des champs électriques orientés verticalement ou horizontalement.

Dans le mode de réalisation représenté en figure 1, les électrodes 14 sont logées dans de petits tubes 18 de matière micro-poreuse qui forment des pièges à bulles et qui peuvent servir également à la circulation d'un électrolyte approprié.

La cuve 10 comprend également des moyens de remplissage et de circulation d'un électrolyte, qui sont ici schématisés sous la forme de deux conduits 20 comportant chacun un moyen d'ouverture et de fermeture tel qu'une électrovanne, et qui sont prévus l'un sur le fond de la cuve 10 ou au voisinage de ce fond, et l'autre en partie supérieure de la cuve.

Selon l'invention, ces conduits 20 sont utilisés pour remplir la cuve d'un gel d'électrophorèse sous forme liquide, par exemple d'une solution d'agarose à une température de l'ordre de 50 à 60° C environ. Lorsque la cuve 10 est remplie de cette solution d'agarose, on solidifie le gel, soit en le laissant refroidir à température ambiante, soit en accélérant ce refroidissement par circulation de liquide froid dans la chemise 12, soit encore en faisant circuler un électrolyte froid dans les tubes 18 entourant les électrodes 14, soit encore en connectant les extrémités des électrodes 14 à une source froide (les électrodes 14 sont en général réalisées en platine, qui est un très bon conducteur de la chaleur).

En variante, on peut également augmenter la concentration d'agarose dans la solution remplissant la cuve 10.

Cette cuve 10 contient alors un grand bloc de gel, que l'on peut utiliser pour la migration et la séparation de macromolécules dont des échantillons ont été déposés dans des puits formés en partie supérieure de ce bloc de gel.

Il faut bien entendu disposer des membranes d'un type classique dans la cuve entre les colonnes d'électrodes avant de procéder à la solidification du gel.

La façon la plus simple de procéder est sans doute de disposer des membranes 22 verticales dans la cuve entre les rangées d'électrodes, ces membranes 22 étant par exemple fixées à un support 24 par leur bord horizontral supérieur, et lestées à leur bord horizontal inférieur. On remplit ensuite lentement la cuve 10, par le bas ou par le haut, en évitant les remous pour que les membranes restent aussi verticales que possible, puis on procède à la solidification du gel.

Pour que les membranes soient plus faciles à manipuler, et pour garantir aussi leur planéité lorsqu'elles sont imprégnées de gel en phase liquide, il est préférable de les monter sur des cadres rigides de support, en procédant essentiellement comme déjà décrit dans la demande internationale WO 90/02601 de la demanderesse et comme représenté schématiquement aux figures 3 et 4. On commence alors par coller ou souder, sur deux bords longitudinaux d'une membrane 22, deux barrettes extensibles 26 qui comportent des trous ou orifices 28 de fixation sur des pions 30 qui sont guidés en déplacement sur les bords longitudinaux d'un cadre 32 dans les directions indiquées par les flèches. Ces pions 30 sont sollicités élastiquement par des ressorts vers l'extérieur du cadre, de façon à maintenir la membrane 22 sous une faible tension. Cette tension permet de garantir la planéité de la membrane 22 et de rattraper un éventuel allongement de celle-ci, résultant de son imprégnation par le gel liquide.

Une barrette 34, comprenant un peigne 36 sur un de ses côtés, peut être engagée sur le cadre 32 de telle sorte que le peigne 36 s'étende sensiblement le long du bord horizontal supérieur de la membrane 22 pour former plus tard, dans le gel, des puits de réception d'échantillons de macromolécules.

Le dispositif selon l'invention est alors utilisé de la façon suivante :

On commence par préparer les membranes 22, en fixant les barrettes extensibles 26 sur leurs bords, puis on pose les membranes 22 sur les cadres 32 et on met en place les barrettes 34 portant les peignes 36.

On dispose ensuite les cadres 32 avec les membranes 22 et les peignes 36 dans la cuve comme représenté en figure 1, celle-ci étant remplie de gel en phase liquide avant ou après la mise en place des cadres 32 et des membranes 22, après quoi on procède à la solidification du gel, par refroidissement et/ou augmentation de sa concentration en gélifiant.

Lorsque le gel est solidifié, on retire les barrettes 34 portant les peignes 36, et on dépose des échantillons de macromolécules dans les rangées de puits qui sont formés dans le gel le long des bords supérieurs horizontaux des membranes 22. On applique alors des potentiels électriques différents aux rangées d'électrodes 14, pour créer des champs électriques verticaux entre ces rangées d'électrodes, sous l'effet desquels les macromolécules contenues dans les puits précités se déplacent verticalement dans le gel en direction du fond de la cuve 10.

Au bout d'un certain temps, pendant lequel les macromolécules ont parcouru dans le gel des distances qui sont fonction de leur masse moléculaire, on modifie les distributions de potentiels électriques aux électrodes 14 pour appliquer des potentiels différents aux colonnes d'électrodes et créer entre celles-ci des champs électriques qui sont horizontaux et perpendiculaires aux membranes 22. Sous l'effet de ces champs électriques, les macromolécules se déplacent horizontalement dans le gel, et se fixent sur les membranes.

On procède ensuite à la liquéfaction, à la dissolution ou à la désagrégation du gel.

On peut pour cela élever la température du gel, en faisant circuler de l'eau chaude dans la chemise 12 entourant la cuve 10. On peut également faire circuler un électrolyte chaud dans les tubes 18 contenant les électrodes 14. On peut encore injecter un liquide chaud sous pression dans la cuve 10 pour désagréger le gel, ou bien le dissoudre par injection d'une solution liquide enzymatique appropriée (par exemple une solution d'agarose dans le cas d'un gel d'agarose).

On peut également, en variante, fermer la cuve 10 de façon étanche et y créer un vide partiel, ce qui va se traduire par une évaporation de l'eau du gel et par la désagrégation de celui-ci.

On peut encore appliquer au gel des vibrations mécaniques ou ultrasonores qui vont le détacher des membranes et/ou le désagréger plus ou moins complètement.

Lorsque le gel est liquéfié, dissous, désagrégé ou simplement décollé des membranes, on sort les cadres 32 de la cuve, on en retire les membranes 22 et on les traite de la façon habituelle.

Il est ensuite nécessaire de vider complètement la cuve, et de la laver avant de la remplir à nouveau de gel en phase liquide pour une nouvelle électrophorèse.

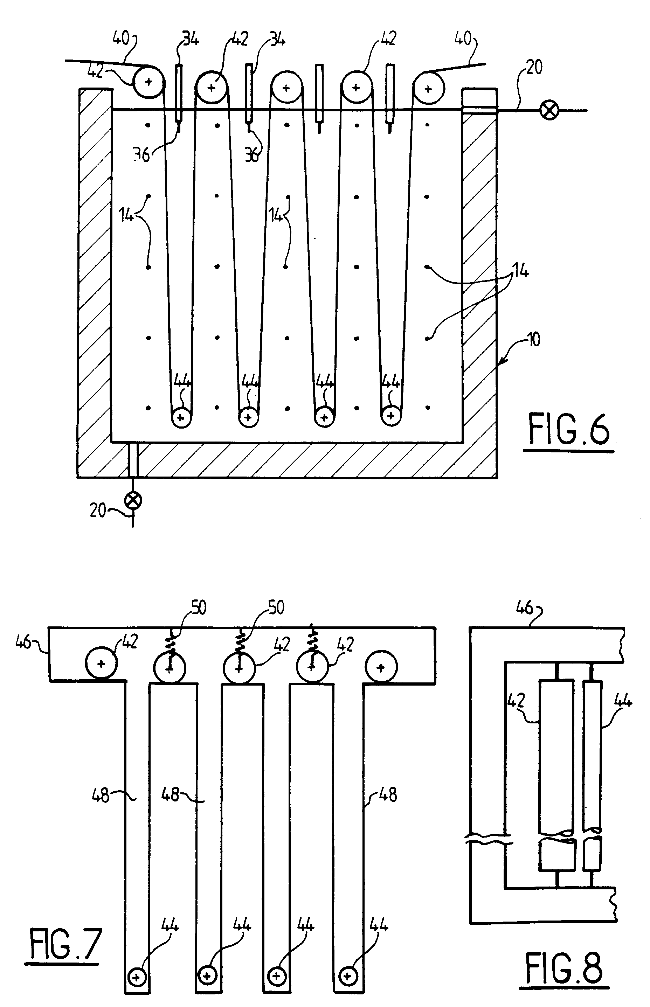

Dans la variante de réalisation qui est représentée schématiquement aux figures 6 à 8, les membranes forment une bande continue 40 qui est guidée sur des rouleaux horizontaux supérieurs 42 et inférieurs 44 montés libres en rotation autour d'axes horizontaux parallèles aux électrodes 14 de la cuve. Les rouleaux supérieurs 42 se trouvent au-dessus des électrodes 14 et du niveau maximum de gel dans la cuve, tandis que les rouleaux inférieurs 44 se trouvent de préférence en-dessous de la rangée inférieure d'électrodes 14. La bande 40 constituant les membranes passe alternativement sur un rouleau supérieur 42, puis sur un rouleau inférieur 44 et ensuite sur un rouleau supérieur 42, etc, pour former deux longueurs verticales de membrane entre les colonnes successives d'électrodes 14.

De préférence, les rouleaux 42 et 44 sont portés par un support commun comprenant par exemple un cadre supérieur 46 portant les axes des rouleaux 42, et des pattes verticales 48 rattachées au cadre supérieur 46 et portant les axes des rouleaux inférieurs 44. Ce support commun est avantageusement mobile de façon à pouvoir être sorti de la cuve 10 pour le positionnement d'une bande continue de membrane 40 sur les rouleaux 42 et 44, et pour être ensuite descendu dans la cuve 10 pour une électrophorèse. Les axes de certains au moins des rouleaux supérieurs 42 peuvent être associés à des ressorts de rappel 50, comme représenté schématiquement en figure 7, de façon à ce que les rouleaux 42 soient en permanence sollicités vers le haut afin d'exercer une faible tension sur la bande 40 plongée dans la cuve.

Pour le reste, le dispositif peut être identique à celui décrit en référence aux figures 1 à 5.

Il est utilisé de la façon suivante :

Le support des rouleaux 42 et 44 étant sorti de la cuve, on commence par mettre en place une bande 40 sur ces rouleaux.

Simultanément, on peut remplir la cuve 10 de gel sous forme liquide, après quoi on descend lentement le support des rouleaux à l'intérieur de la cuve. Inversement, on peut d'abord placer ce support à l'intérieur de la cuve avant de le remplir lentement de gel sous forme liquide.

Lorsque les longueurs de membrane sont complètement immergées dans le gel, on place des peignes 34,36 entre les rouleaux supérieurs 42 comme représenté schématiquement en figure 6. Comme les rouleaux 42 et 44, ces peignes peuvent être portés par un support commun.

On fait ensuite solidifier le gel, en utilisant les moyens précédemment décrits.

On retire ensuite les peignes et on dépose des échantillons de macromolécules dans les puits formés dans le gel par les dents des peignes. Il suffit ensuite d'appliquer aux électrodes 14 les différences de potentiel voulues pour réaliser d'abord la migration et la séparation des macromolécules par déplacement vertical vers le bas, puis le transfert horizontal des macromolécules sur les longueurs verticales de membranes.

On procède ensuite à la liquéfaction, à la dissolution ou à la désagrégation du gel en utilisant les mêmes moyens que précités.

On peut ensuite sortir de la cuve le support des rouleaux 42 et 44 et tirer sur une extrémité de la bande 40 pour récupérer les longueurs de membrane sur lesquelles des macromolécules ont été transférées.

Simultanément on amène en place entre les rouleaux 42 et 44, de nouvelles longueurs de membranes qui seront utilisées pour l'électrophorèse suivante.

Pendant ce temps, la cuve 10 a été vidée et nettoyée et est prête pour une nouvelle électrophorèse.

Dans une variante de réalisation non représentée, les rouleaux de guidage de la bande 40 peuvent être verticaux. Dans ce cas, il est préférable que les électrodes de la cuve soient également verticales, pour ne pas trop compliquer la disposition des longueurs de bande entre les plans d'électrodes.

La bande continue 40, qui va former les longueurs de membrane entre les plans d'électrodes, peut être formée d'une grande longueur de membrane, lorsque celle-ci est suffisamment résistante du point de vue mécanique. Par contre, lorsque la membrane a des caractéristiques mécaniques faibles, en raison de sa minceur et/ou de sa nature, il est préférable de fixer des longueurs prédéterminées de membrane sur des fenêtres prédécoupées dans une bande support, qui peut être réalisée dans la même matière que la membrane mais avec une plus forte épaisseur, ou dans une matière différente.

## Revendications

1. Procédé d'électrophorèse multiple pour la migration contrôlée de macromolécules et leur transfert sur des membranes, dans une cuve (10) comprenant une pluralité d'électrodes (14) allongées parallèles, et des moyens (16) d'application de potentiels électriques à ces électrodes pour créer successivement entre elles un premier champ électrique de migration des macromolécules, puis un deuxième champ électrique perpendiculaire au premier pour le transfert des macromolécules sur des membranes (22), caractérisé en ce qu'il consiste à disposer dans la cuve (10) des membranes (22) qui sont sensiblement parallèles entre elles et aux électrodes (14) et qui s'étendent entre les électrodes et à remplir la cuve d'un gel d'électrophorèse en phase liquide, ce remplissage étant effectué avant ou après disposition des membranes (22) dans la cuve (10), puis à solidifier ce gel, à déposer ensuite des échantillons de macromolécules dans des puits formés dans le gel le long des membranes, à appliquer aux électrodes (14) des potentiels électriques pour assurer d'abord la migration des macromolécules dans le gel puis leur transfert sur les membranes, puis à liquéfier, dissoudre ou désagréger le gel et à sortir les membranes de la cuve.

2. Procédé selon la revendication 1, caractérisé en ce qu'il consiste également à vider et à nettoyer la cuve (10) avant une nouvelle électrophorèse.

3. Procédé selon la revendication 1 ou 2, caractérisé en ce que les membranes (22) à disposer dans la cuve (10) sont montées préalablement sur des cadres (32) de support et de manipulation, et éventuellement mises en tension sur ces cadres.

4. Procédé selon la revendication 1 ou 2, caractérisé en ce que les membranes à disposer dans la cuve forment une bande continue (40) guidée en zigzag sur des rouleaux parallèles (42,44).

5. Procédé selon l'une des revendications précédentes, caractérisé en ce qu'il consiste également à chauffer ou refroidir le gel dans la cuve (10) au moyen des électrodes (14) précitées.

6. Procédé selon l'une des revendications précédentes, caractérisé en ce que les électrodes (14) étant logées à l'intérieur de tubes micro-poreux (18), il consiste également à faire circuler dans ces tubes un électrolyte liquide chaud ou froid pour chauffer ou refroidir le gel d'électrophorèse.

7. Procédé selon l'une des revendications précédentes, caractérisé en ce qu'il consiste également à entourer la cuve (10) d'une chemise (12) de circulation d'un liquide de transfert de chaleur pour le chauffage et le refroidissement du gel d'électrophorèse.

8. Procédé selon l'une des revendications 1 à 4, caractérisé en ce qu'il consiste également à dissoudre le gel dans la cuve (10) par injection d'une solution enzymatique adaptée ou à le désagréger par dépression, par injection de liquide sous pression ou par vibration mécanique ou ultrasonore.

9. Dispositif d'électrophorèse multiple pour la migration contrôlée de macromolécules et leur transfert sur des membranes, comprenant une cuve (10) comportant une pluralité d'électrodes (14) allongées parallèles et des moyens (16) d'application de potentiels électriques aux électrodes pour créer successivement entre elles un premier champ électrique de migration et de séparation des macromolécules puis un deuxième champ électrique perpendiculaire au premier pour le transfert des macromolécules sur des membranes (22), caractérisé en ce qu'il comprend également :
- des moyens (32,42,44) de guidage, ou de support des membranes (22) dans la cuve par du gel d'électrophorèse en phase liquide,
- des moyens (12) de solidification du gel dans la cuve,
- et des moyens (12) destinés à liquéfier, dissoudre ou désagréger le gel dans la cuve.

10. Dispositif selon la revendication 9, caractérisé en ce qu'il comprend des moyens (34,36) pour former dans le gel des rangées de puits de réception d'échantillons de macromolécules.

11. Dispositif selon la revendication 9 ou 10, caractérisé en ce que les moyens de liquéfaction du gel dans la cuve (10) sont du type à élévation de température, par chauffage de la cuve et/ou chauffage des électrodes et/ou circulation d'un liquide chaud dans des tubes micro-poreux (18) contenant les électrodes et/ou dans une chemise (12) entourant la cuve (10).

12. Dispositif selon la revendication 9 ou 10, caractérisé en ce que les moyens de dissolution ou de désagrégation du gel sont du type à injection de liquide sous pression, ou à dépression, ou à génération de vibrations mécaniques ou ultrasonores.

13. Dispositif selon l'une des revendications 9 à 12, caractérisé en ce que les membranes (22) sont fixées par leurs bords sur des cadres de support (32) qui comprennent éventuellement des moyens de mise en tension des membranes.

14. Dispositif selon l'une des revendications 9 à 12, caractérisé en ce que les membranes forment une bande continue (40), guidée en zigzag sur des rouleaux (42,44) parallèles aux électrodes.

15. Dispositif selon la revendication 14, caractérisé en ce que les rouleaux (42,44) de guidage de ladite bande (40) sont portés par un support commun (46) et forment un ensemble unitaire mobile que l'on peut introduire dans la cuve (10) et sortir de celle-ci.

## Claims

1. A multiple electrophoresis method for controlled migration of macromolecules and transfer thereof onto membranes in a vessel (10) containing a plurality of parallel elongate electrodes (14) and having means (16) for applying electrical potentials to the electrodes for establishing between them successively a first electric field for macromolecule migration, and then a second electric field perpendicular to the first for transferring the macromolecules onto the membranes (22), the method being characterized in that it consists in placing in the vessel (10) membranes (22) which are substantially parallel to one another and to the electrodes (14) and which extend between the electrodes, and in filling the vessel with an electrophoresis gel in the liquid phase, the filling being performed before or after the membranes (22) have been placed in the vessel (10), then in solidifying the gel, in subsequently placing samples of macromolecules in wells formed in the gel along the membranes, in applying electrical potentials to the electrodes (14) initially to cause the macromolecules to migrate through the gel, and then to transfer them onto the membranes, then in liquefying, dissolving, or decomposing the gel, and in removing the membranes from the vessel.

2. A method according to claim 1, characterized in that it then consists also in emptying and cleaning the vessel (10) before a new electrophoresis operation.

3. A method according to claim 1 or 2, characterized in that the membranes (22) to be placed in the vessel (10) are previously mounted on support and manipulation frames (32), and are optionally tensioned on said frames.

4. A method according to claim 1 or 2, characterized in that the membranes to be placed in the vessel form a continuous strip (40) that is guided along a zigzag path over parallel rollers (42, 44).

5. A method according to any preceding claim, characterized in that it consists also in heating or cooling the gel in the vessel (10) by means of the above-specified electrodes (14).

6. A method according to any preceding claim, characterized in that the electrodes (14) are received in microporous tubes (18) and the method consists also in causing a hot or cold liquid electrolyte to circulate along said tubes to heat or cool the electrophoresis gel.

7. A method according to any preceding claim, characterized in that it consists also in surrounding the vessel (10) in a jacket (12) for circulating a heat transfer liquid for heating and cooling the electrophoresis gel.

8. A method according to any one of claims 1 to 4, characterized in that it consists also in dissolving the gel in the vessel (10) by injecting an appropriate enzymatical solution or in decomposing it by applying suction, by injecting liquid under pressure, or by mechanical or ultrasound vibration.

9. Multiple electrophoresis apparatus for controlled migration of macromolecules and for transferring them onto membranes, the apparatus comprising a vessel (10) containing a plurality of parallel elongate electrodes (14) and having means (16) for applying electrical potentials to the electrodes to create between them successively a first electric field for macromolecule migration and separation, and then a second electric field perpendicular to the first for transferring the macromolecules onto the membranes (22), the apparatus being characterized in that it also comprises:
means (32, 42, 44) for guiding or supporting the membranes (22) in the vessel (10) substantially parallel to one another and to the above-specified electrodes;
means (20) for filling the vessel with electrophoresis gel in the liquid phase;
means (12) for solidifying the gel in the vessel; and
means (12) for liquefying, dissolving, or decomposing the gel in the vessel.

10. Apparatus according to claim 9, characterized in that it includes means (34, 36) for forming rows of wells in the gel to receive samples of macromolecules.

11. Apparatus according to claim 9 or 10, characterized in that the means for liquefying the gel in the vessel (10) are of the type that raise temperature, by heating the vessel and/or heating the electrodes and/or causing a hot liquid to circulate along microporous tubes (18) containing the electrodes, and/or in a jacket (12) surrounding the vessel (10).

12. Apparatus according to claim 9 or 10, characterized in that the means for dissolving or decomposing the gel are of the type comprising injecting a liquid under pressure, or applying suction, or generating mechanical or ultrasound vibrations.

13. Apparatus according to any one of claims 9 to 12, characterized in that the membranes (22) are fixed by their edges on support frames (32) optionally including means for tensioning the membranes.

14. Apparatus according to any one of claims 9 to 12, characterized in that the membranes form a continuous strip (40) that is guided along a zigzag path over rollers (42, 44) parallel to the electrodes.

15. Apparatus according to claim 14, characterized in that the rollers (42, 44) for guiding said strip (40) are carried by a common support (46), together forming a moving unitary assembly that can be inserted in the vessel (10) and extracted therefrom.

## Patentansprüche

1. Multiples Elektrophoreseverfahren für die kontrollierte Wanderung von Makromolekülen und deren Transport auf Membranen in einer Wanne (10), umfassend eine Vielzahl von parallelen länglichen Elektroden (14) und Einrichtungen (16) zur Anlegung von elektrischen Potentialen an diese Elektroden, um zwischen ihnen aufeinanderfolgend ein erstes elektrisches Feld zur Wanderung der Makromoleküle, dann ein zweites zu dem ersten senkrechtes elektrisches Feld zum Transport der Makromoleküle auf die Membranen (22) zu erzeugen, dadurch gekennzeichnet, daß es darin besteht, die Membranen (22), die im wesentlichen parallel zueinander und zu den Elektroden (14) sind und sich zwischen den Elektroden erstrecken, in der Wanne (10) anzuordnen und die Wanne mit einem Elektrophoresegel in Flüssigphase zu füllen, wobei diese Auffüllung vor oder nach der Anordnung der Membranen (22) in der Wanne (10) vorgenommen wird, dann dieses Gel zu verfestigen, dann Proben von Makromolekülen in Bohrungen, die in dem Gel längs der Membranen gebildet sind, einzusetzen, an die Elektroden (14) elektrische Potentiale anzulegen, um zunächst die Wanderung der Makromoleküle in dem Gel, dann deren Transport auf die Membranen sicherzustellen, dann das Gel zu verflüssigen, aufzulösen oder aufzuschließen und die Membranen aus der Wanne herauszunehmen.

2. Verfahren nach Anspruch 1, dadurch gekennzeichnet, daß es gleichermaßen darin besteht, die Wanne (10) vor einer erneuten Elektrophorese zu entleeren und zu reinigen.

3. Verfahren nach Anspruch 1 oder 2, dadurch gekennzeichnet, daß die in der Wanne (10) anzuordnenden Membranen (22) vorhergehend an Träger- und Handhabungsrahmen (32) montiert und gegebenenfalls in diesen Rahmen unter Spannung gesetzt werden.

4. Verfahren nach Anspruch 1 oder 2, dadurch gekennzeichnet, daß die in der Wanne anzuordnenden Membranen ein kontinuierliches Band (40) bilden, das auf parallelen Rollen (42, 44) im Zickzack geführt ist.

5. Verfahren nach einem der vorhergehenden Ansprüche, dadurch gekennzeichnet, daß es gleichermaßen darin besteht, das Gel in der Wanne (10) mittels der vorerwähnten Elektroden (14) zu erwärmen oder abzukühlen.

6. Verfahren nach einem der vorhergehenden Ansprüche, dadurch gekennzeichnet, daß die Elektroden (14) im Inneren von mikroporösen Rohren (18) untergebracht werden, wobei es gleichermaßen darin besteht, eine warme oder kalte Elektrolytflüssigkeit in diesen Rohren zirkulieren zu lassen, um das Elektrophoresegel zu erwärmen oder abzukühlen.

7. Verfahren nach einem der vorhergehenden Ansprüche, dadurch gekennzeichnet, daß es gleichermaßen darin besteht, die Wanne (10) mit einem Mantel (12) zur Zirkulation eines Fluids zur Übertragung von Wärme für die Erwärmung und die Abkühlung des Elektrophoresegels zu umgeben.

8. Verfahren nach einem der Ansprüche 1 bis 4, dadurch gekennzeichnet, daß es darin besteht, gleichermaßen das Gel in der Wanne (10) durch Injizierung einer geeigneten enzymatischen Lösung aufzulösen oder durch Unterdruck, durch Injizierung einer Flüssigkeit unter Druck oder durch mechanische Schwingung oder Ultraschall-Schwingung aufzuschließen.

9. Multiple Elektrophoresevorrichtung für die kontrollierte Wanderung von Makromolekülen und deren Transport auf Membranen, die eine Wanne (10) umfaßt, welche eine Vielzahl von parallelen länglichen Elektroden (14) und Einrichtungen (16) zur Anlegung von elektrischen Potentialen an die Elektroden, um zwischen ihnen aufeinanderfolgend ein erstes elektrisches Feld zur Wanderung und zur Trennung der Makromoleküle, dann ein zweites zu dem ersten senkrechtes elektrisches Feld zum Transport der Makromoleküle auf die Membranen (22) zu erzeugen, umfaßt, dadurch gekennzeichnet, daß es gleichermaßen umfaßt:
- Einrichtungen (32, 42, 44) zur Führung oder zur Abstützung der Membranen (22) in der Wanne durch das Elektrophoresegel in Flüssigphase,
- Einrichtungen (12) zur Verfestigung des Gels in der Wanne,
- und Einrichtungen (12), die dazu bestimmt sind, das Gel in der Wanne zu verflüssigen, aufzulösen oder aufzuschließen.

10. Vorrichtung nach Anspruch 9, dadurch gekennzeichnet, daß es Einrichtungen (34, 36) umfaßt, um in dem Gel Reihen von Bohrungen zur Aufnahme von Proben von Makromolekülen zu bilden.

11. Vorrichtung nach Anspruch 9 oder 10, dadurch gekennzeichnet, daß die Einrichtungen zur Verflüssigung des Gels in der Wanne (10) des Typs zur Erhöhung der Temperatur durch Erwärmung der Wanne und/oder Erwärmung der Elektroden und/oder Zirkulation einer warmen Flüssigkeit in die Elektroden enthaltenden mikroporösen Rohren (18) und/oder in einem die Wanne (10) umgebenden Mantel (12) sind.

12. Vorrichtung nach Anspruch 9 oder 10, dadurch gekennzeichnet, daß die Einrichtungen zur Auflösung oder zur Aufschließung des Gels des Typs zur Injizierung von Flüssigkeit unter Druck oder zum Anlegen eines Unterdrucks oder zum Erzeugen von mechanischen Schwingungen oder Ultraschall-Schwingungen sind.

13. Vorrichtung nach einem der Ansprüche 9 bis 12, dadurch gekennzeichnet, daß die Membranen (22) über deren Ränder an Trägerrahmen (32) befestigt sind, die gegebenenfalls Einrichtungen zur Aufbringung einer Spannung auf die Membranen umfassen.

14. Vorrichtung nach einem der Ansprüche 9 bis 12, dadurch gekennzeichnet, daß die Membranen ein kontinuierliches Band (40) bilden, das auf zu den Elektroden parallelen Rollen (42, 44) im Zickzack geführt ist.

15. Vorrichtung nach Anspruch 14, dadurch gekennzeichnet, daß die Rollen (42, 44) zur Führung des Bandes (40) an einem gemeinsamen Träger (46) abgestützt sind und eine bewegliche Einheit bilden, die in die Wanne (10) einführbar und aus dieser herausführbar ist.
